# EUROPEAN PATENT APPLICATION

(11) **EP 3 805 162 A1**
(43) Date of publication of application: **14.04.2021**
(21) Application number: 19810910.0
(22) Date of filing: 26.04.2019
(51) Int. Cl.: C02F 1/44, B01D 61/00, B01D 61/58, B01D 65/02, B01D 65/06, B01D 69/02, B63H 21/32, F03G 7/00

(54) **DEVICE FOR PURIFYING SCRUBBER DRAINAGE WATER, METHOD FOR SAME, AND SALINITY GRADIENT POWER SYSTEM**

(30) Priority: 01.06.2018 JP 2018106020
(71) Applicant: Organo Corporation, Tokyo 136-8631 (JP)
(72) Inventor: SASAJIMA Yasuhiro, Tokyo 136-8631 (JP); YODEN Mitsuru, Tokyo 136-8631 (JP); KANAI Osamu, Tokyo 136-8631 (JP); TAKIGUCHI Keisuke, Tokyo 136-8631 (JP)
(74) Representative: Hynell Intellectual Property AB
(86) International application number: PCT/JP2019/017848
(87) International publication number: WO 2019/230295

(57) **Abstract**

The removal efficiency in removing contaminants from scrubber wastewater is enhanced.

Purifying apparatus 1 purifies scrubber wastewater that is exhausted from exhaust gas treatment system 2 for an engine of a ship, and has filter membrane 4 that filters scrubber wastewater. The purifying method for purifying scrubber wastewater has the step of filtering the scrubber wastewater by means of filter membrane 4, wherein the scrubber wastewater is exhausted from an exhaust gas treatment system for an engine of a ship.

## Description

### Technical Field

The present application is based upon and claims priority from JP 2018-106020 filed on June 1, 2018, the disclosure of which is hereby incorporated by reference herein in its entirety.

The present invention relates to a purifying apparatus and a purifying method for purifying scrubber wastewater and to an osmotic power generation system utilizing the purifying apparatus for scrubber wastewater.

### Background Art

Emission control of sulfur oxides (SOx) from marine vessels has been tightened and, as one of the countermeasures therefor, installation of an exhaust gas scrubber for removing SOx from exhaust gas of a diesel engine has been studied. There are several types of exhaust gas scrubbers, and one of them is known as a wet type. In a wet type exhaust gas scrubber, scrubbing water is sprayed to the exhaust gas of a diesel engine so that the sprayed scrubbing water comes into gas-liquid contact with the exhaust gas, and SOx is removed by adsorption. Since this type of an exhaust gas scrubber generates scrubber wastewater that contains SOx, as well as fine particulate matter such as soot, oil, aromatic hydrocarbon and the like that are contained in the exhaust gas, a purifying apparatus for purifying the scrubber wastewater is provided together. It should be noted that, in this specification, SOx, fine particulate matter, oil, aromatic hydrocarbon and the like that are contained in the scrubber wastewater are generically referred to as contaminants.

Patent documents 1 and 2 disclose a purifying apparatus for purifying scrubber wastewater using a centrifugal separator. Contaminants that are contained in the scrubber wastewater are separated from water by the action of centrifugal force.

Patent document 1: JP 5859463
Patent document 2: JP 6130561

### Summary of Invention

Contaminants that have been separated are stored in the ship as waste material, and purified water is discharged to the sea after it is confirmed that the purified water has satisfied the emission standards. However, in principle, the removal efficiency of the purifying apparatus using a centrifugal separator decreases as contaminants (in particular, fine particulate matter) become fine, and there is a possibility that the criterion of turbidity, which is one of the emission standards, will not be satisfied.

It is an object of the present invention to provide a purifying apparatus for purifying scrubber wastewater having high efficiency in removing contam inants.

A purifying apparatus of the present invention is directed to a purifying apparatus for purifying scrubber wastewater that is exhausted from an exhaust gas treatment system for an engine of a ship. The purifying apparatus comprises a filter membrane that filters scrubber wastewater.

Since the purifying apparatus of the present invention has a filter membrane that filters the scrubber wastewater, it is possible to enhance the efficiency in removing contaminants by appropriately selecting the pore diameter of the filter membrane.

The above-described and other objects, features, and advantages of this application will become apparent from the following detailed description with reference to the accompanying drawings that illustrate the present application.

### Brief Description of Drawings

Fig. 1 is a schematic view showing the arrangement of a purifying apparatus according to a first embodiment of the present invention;
Fig. 2 is a schematic view showing the arrangement of a purifying apparatus according to a modification of the first embodiment;
Fig. 3 is a schematic view showing the arrangement of a purifying apparatus according to a second embodiment of the present invention;
Fig. 4 is a schematic perspective view of a ceramic membrane;
Fig. 5 is a schematic view showing the arrangement of a purifying apparatus according to a modification of the second embodiment;
Fig. 6 is a schematic view showing the arrangement of an osmotic power generation system according to a third embodiment of the present invention;
Fig. 7 is schematic view showing the arrangement of test equipment of an Example; and
Fig. 8 is a diagram showing a change over time in the permeating flux of the filter membrane of the Example.

### Description of Embodiments

### (First embodiment)

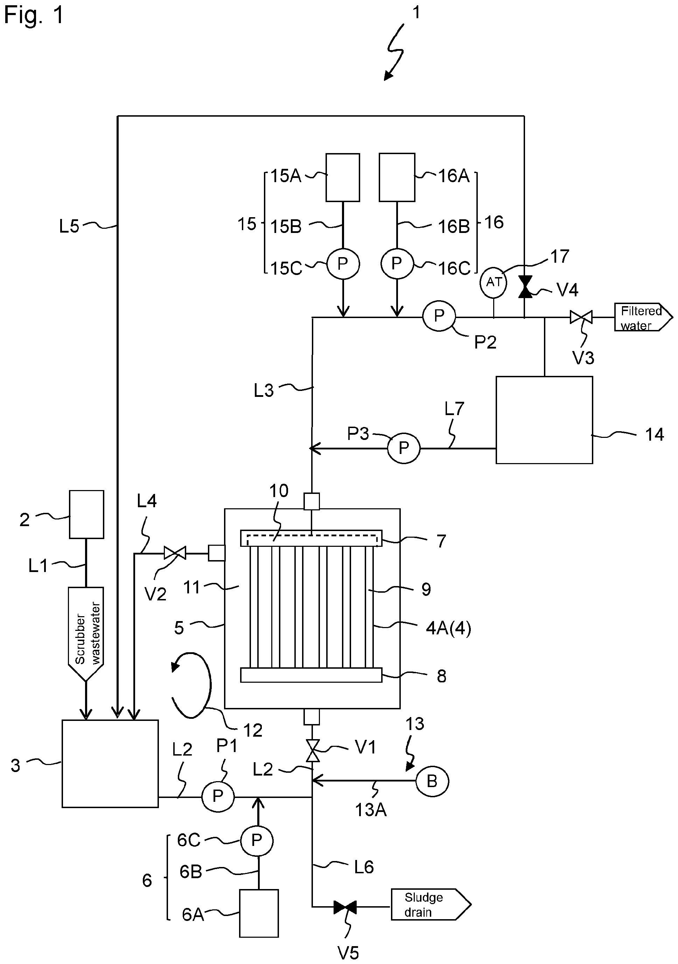

Fig. 1 shows a schematic view showing the arrangement of purifying apparatus 1 according to the first embodiment of the present invention. Purifying apparatus 1 purifies scrubber wastewater that is exhausted from scrubber 2, which is an exhaust gas treatment system for an engine of a ship and which is also a source of the scrubber wastewater. Since sea water is usually sprayed to the exhaust gas in scrubber 2 of a marine vessel, the scrubber wastewater is sea water. However, pure water may also be used as scrubbing water, and in that case, the scrubber wastewater is fresh water.

Purifying apparatus 1 has raw water tank 3 that receives scrubber wastewater that is exhausted from scrubber 2, as well as filter membrane housing 5 that houses filter membrane 4 for filtering the scrubber wastewater. Filter membrane 4 is not limited as long as the scrubber wastewater can be filtered, and examples of the shapes of the membrane include a hollow fiber membrane and a flat film. In the present embodiment, filter membrane 4 is hollow fiber membrane 4A. Raw water tank 3 is connected to scrubber 2 via scrubber wastewater exhaust line L1. Filter membrane housing 5 is connected to raw water tank 3 via scrubber wastewater supply line L2, and scrubber wastewater supply pump P1 is provided on scrubber wastewater supply line L2. Scrubber wastewater to be treated is fed by scrubber wastewater supply pump P1 and is supplied from raw water tank 3 to filter membrane housing 5. Raw water tank 3 also functions to absorb variations in the amount of the generated scrubber wastewater. Specifically, when an operation is performed in which the amount of the scrubbing water of scrubber 2 is increased or decreased depending on the engine load, the amount of the generated scrubber wastewater may temporarily be increased, and raw water tank 3 has a capacity for receiving the scrubber wastewater in such a case. Scrubber wastewater supply line L2 is connected to the bottom of filter membrane housing 5, more preferably, to the bottom of filter membrane housing 5 and below hollow fiber membranes 4A.

Flocculant supply means 6 is connected to scrubber wastewater supply line L2. Flocculant supply means 6 has flocculant tank 6A, flocculant supply line 6B that connects flocculant tank 6A to scrubber wastewater supply line L2 and flocculant injection pump 6C that is provided on flocculant supply line 6B. Examples of flocculant include polyaluminium chloride (PAC), ferric chloride and sulfuric acid band. Flocculant coarsens contaminants, in particular, fine particulate matter, that are contained in the scrubber wastewater, and enhance the filtering efficiency of hollow fiber membrane 4A. In some cases, polymer flocculant aid of an anionic system, a cationic system or a nonionic system may be added.

Filter membrane housing 5 constitutes a hollow fiber membrane module having a cylindrical shape or a rectangular parallelepiped shape. Although not shown, a plurality of modules may be arranged in parallel, and each module may be individually isolated from purifying apparatus 1. A part of the modules may be isolated while purifying apparatus 1 continues to operate, so that back washing (described below) and chemical washing (described below) of the isolated module may be performed.

In filter membrane housing 5, scrubber wastewater is stored and many hollow fiber membranes 4A are housed. Hollow fiber membranes 4A are supported by upper support member 7 at the upper ends thereof and by lower support member 8 at the lower ends thereof. There is no particular limitation on the materials that may be used for hollow fiber membrane 4A, but the membrane is preferably formed of a hydrophilic material in order to limit the adhesion of contaminants. Examples of the material include PTFE (polytetrafluoroethylene), PES (polyether sulfone), PAN (polyacrylonitrile) and the like. PVDF (polyvinylidene fluoride) is a rather hydrophobic material, but if a hydrophilic treatment, such as mixing a hydrophilizing material, is performed, then the main material may also be PVDF. The outer surfaces of hollow fiber membranes 4A are in direct contact with the scrubber wastewater in filter membrane housing 5. Specifically, hollow fiber membranes 4A are housed and held in filter membrane housing 5 such that they are immersed in the scrubber wastewater. The inner space of hollow fiber membrane 4A is permeating space 9, i.e., a space where filtered water flows, and the inner space communicates with connecting space 10 that is provided in upper support member 7. On the other hand, the lower ends of hollow fiber membranes 4A are sealed by lower support member 8. The water (sea water) that is contained in the scrubber wastewater moves into permeating space 9 through the side surfaces of hollow fiber membranes 4A so as to become filtered water, while contaminants stay in inlet space 11 outside of hollow fiber membranes 4A.

Connecting space 10 of upper support member 7, i.e., permeating space 9 of hollow fiber membranes 4A, is connected to filtered water exhaust line L3, where filtered water that passes through hollow fiber membranes 4A is exhausted. Filtered water exhaust line L3 is connected to the upper surface of filter membrane housing 5. Suction pump P2 is provided on filtered water exhaust line L3, and the pressure in permeating space 9 of hollow fiber membranes 4A is set negative relative to the pressure in inlet space 11 by suction pump P2. A part of the scrubber wastewater that is introduced into filter membrane housing 5 passes through hollow fiber membranes 4A due to the pressure difference, to move into permeating space 9, and is exhausted to filtered water exhaust line L3 as filtered water. Since membrane filtering can be performed as long as there is a pressure difference, water head may also be used in addition to a suction pump. When water head is used, operation cost of the suction pump can be reduced. The method of providing a pressure difference can be appropriately determined depending on the configuration of the ship to which the present invention is applied.

First return line L4 is connected to the upper side surface of filter membrane housing 5. First return line L4 is connected to scrubber wastewater supply line L2 and returns most of the scrubber wastewater to scrubber wastewater supply line L2 via raw water tank 3. This is because feeding the entire amount of the scrubber wastewater through hollow fiber membranes 4A will result in excessive pressure loss at hollow fiber membranes 4A, which will easily cause an increase in the operation cost of scrubber wastewater supply pump P1, clogging or deterioration of hollow fiber membranes 4A, and the like. Scrubber wastewater supply line L2, raw water tank 3, filter membrane housing 5 and hollow fiber membranes 4A constitute circulating line 12 for the scrubber wastewater that is connected to scrubber 2 (a source of the scrubber wastewater). A part of circulating line 12 forms inlet space 11 for hollow fiber membranes 4A.

Turbidimeter 17 for confirming whether or not turbidity of the filtered water satisfies the emission standards is provided on filtered water exhaust line L3. Second return line L5 branches from filtered water exhaust line L3 downstream of turbidimeter 17 and is connected to raw water tank 3. If the turbidity of the filtered water does not satisfy the emission standards, then valve V3 on filtered water exhaust line L3 is closed and valve V4 on second return line L5 is opened, so that the filtered water is returned to filter membrane housing 5 via second return line L5, raw water tank 3 and scrubber wastewater supply line L2 so that the filtered water is purified again by hollow fiber membranes 4A. If the turbidity of the filtered water satisfies the emission standards, the filtered water is discharged into the sea.

Sludge discharge line L6 branches from scrubber wastewater supply line L2. Sludge discharge line L6 collects contaminants that accumulate in circulating line 12 including filter membrane housing 5. The concentration of contaminants in the scrubber wastewater that flows in circulating line 12 increases while the scrubber wastewater is filtered and moves to permeating space 9 of hollow fiber membranes 4A. Accordingly, the contaminants that accumulate in circulating line 12 are discharged in the form of sludge by intermittently opening valve V5 on sludge discharge line L6. In other words, since fresh scrubber wastewater is supplied from scrubber 2 while a part of the concentrated scrubber wastewater is discharged, the concentration of the contaminants in circulating line 12 is substantially maintained at a constant level. It should be noted that since valve V5 can be operated during the operation of purifying apparatus 1, purifying apparatus 1 is not required to halt when valve V5 is operated.

Contaminants adhere to the outer surfaces of hollow fiber membranes 4A during use. It is desirable to keep the outer surfaces of hollow fiber membranes 4A as clean as possible because the contaminants may cause a decrease in flux and in filtering performance. To this end, air bubble supply means 13 are provided in the present embodiment. Air bubble supply means 13 has air bubble supply line 13A that is connected to scrubber wastewater supply line L2. By connecting air bubble supply means 13 to scrubber wastewater supply line L2, it is possible to prevent air bubbles from being entrained by the contaminants when the contaminants (the sludge) are collected. Air bubble supply means 13 are provided preferably on scrubber wastewater supply line L2 between the inlet of filter membrane housing 5 and the branch point of sludge discharge line L6. Air bubble supply means 13 supplies air or an inert gas to filter membrane housing 5. Air bubbles are introduced into filter membrane housing 5 from the bottom thereof via air bubble supply line 13A and scrubber wastewater supply line L2, and then flow upward while scraping the side surfaces of hollow fiber membranes 4A. Due to the scrubbing effect thus caused, contaminants that adhere to the side surfaces of hollow fiber membranes 4A are peeled off. Since air bubble supply line 13A of air bubble supply means 13 is provided between valve V5 on sludge discharge line L6 and filter membrane housing 5, the air bubbles are always supplied to filter membrane housing 5 regardless of whether valve V5 is open or closed. It is also possible to intermittently stop suction pump P2 in order to perform scrubbing by circulating the scrubber wastewater and by the air bubbles. Since the negative pressure in permeating space 9 is lost, the contaminants adhering to the side surfaces of hollow fiber membranes 4A can be more effectively peeled off.

Filtered water tank 14 is connected to filtered water exhaust line L3. Backwash water supply line L7 is connected to filtered water tank 14, and merges with filtered water exhaust line L3. Backwash water transfer pump P3 is provided on backwash water supply line L7. Filtered water tank 14 stores a part of the filtered water the turbidity of which, measured by turbidimeter 17, satisfies predetermined criteria and which can be discharged into the sea. The filtered water that is stored in filtered water tank 14 is used to backwash hollow fiber membranes 4A. It is possible to effectively prevent contaminants from adhering to the outer surfaces of hollow fiber membranes 4A by periodically performing backwashing. In order to perform the backwashing, valve V3 is closed first (valve V4 is also closed if it is open) and suction pump P2 is stopped. Backwash water is then supplied to permeating space 9 of hollow fiber membranes 4A by means of backwash water transfer pump P3. As a result, the backwash water flows from permeating space 9 to inlet space 11, so as to peel off contaminants that adhere to the outer surfaces of hollow fiber membranes 4A more effectively than by scrubbing. Used backwash water may be discharged through sludge discharge line L6, or may be returned to raw water tank 3, or may be stored in filter membrane housing 5. It should be noted that pure water or diluted agent (described later) may be used for backwash water instead of the above-described filtered water. When a plurality of modules is arranged in parallel, only a module to be backwashed is isolated by isolation valves (not illustrated), and the backwash is performed on the module. In this case, filtration by the other modules can be continued without stopping suction pump P2.

Filtered water exhaust line L3 is connected to agent washing means 15 and surface-active agent supply means 16, both for removing contaminants that adhere to the outer surfaces of hollow fiber membranes 4A. Agent washing means 15 includes agent tank 15A, agent supply line 15B that connects agent tank 15A to filtered water exhaust line L3 and agent injection pump 15C that is provided on agent supply line 15B. Surface-active agent supply means 16 includes **surface**-active agent tank 16A, surface-active agent supply line 16B that connects surface-active agent tank 16A to filtered water exhaust line L3 and surface-active agent injection pump 16C that is provided on surface-active agent supply line 16B. Agent washing is effective for removing contaminants that cannot be removed by backwashing, but it is desirable that agent washing be performed less frequently than backwashing in order to limit the use of the agent and to avoid suspension of the operation for a long period of time. In order to perform the agent washing, valves V1, V2, V3 are closed (valve V4 is also closed if it is open) in order to isolate filter membrane housing 5 from purifying apparatus 1. Then, surface-active agent and chemical agent are supplied to filter membrane housing 5 so as to immerse hollow fiber membranes 4A. The surface-active agent and the chemical agent may be supplied at the same time, or may be sequentially supplied with one of them supplied first. By keeping hollow fiber membranes 4A immersed in the surface-active agent and the chemical agent for a certain period of time, contaminants that firmly adhere to the outer surfaces of hollow fiber membranes 4A can be removed. Thereafter, valves V1 and V5 are opened in order to discharge used surface-active agent and chemical agent. As the chemical agent, an alkaline agent, such as sodium hydroxide, may preferably be used, and as the surface-active agent, an anionic surface-active agent or a zwitterionic surface-active agent may preferably be used. In addition to the combination of sodium hydroxide and a surface-active agent, a combination of sodium hydroxide and sodium hypochlorite may be used, or sulfuric acid etc. may be used. In place of the agents mentioned above, hydrochloric acid or organic acids, such as oxalic acid and citric acid, may be used depending on the properties of the wastewater.

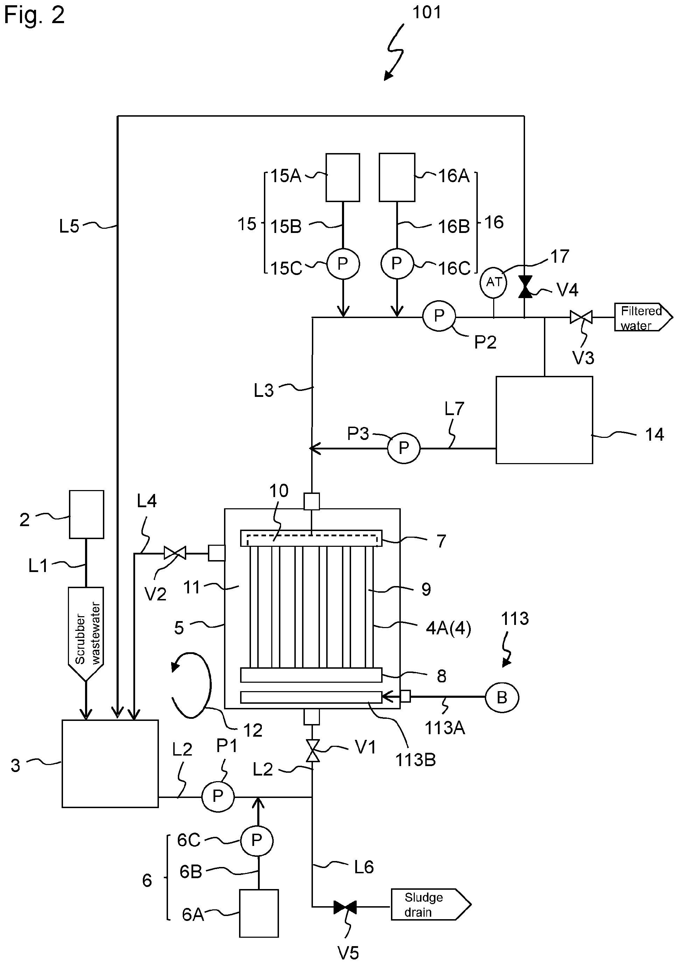

Fig. 2 is a view similar to Fig. 1 showing the arrangement of purifying apparatus 101 of a modification of the present embodiment. Air bubble generating means 113 has air bubble supply line 113A and air distribution pipe 113B that is connected to air bubble supply line 113A and that is housed in filter membrane housing 5. Air distribution pipe 113B is provided below hollow fiber membranes 4A. Air distribution pipe 113B is a tube having a plurality of holes that communicate with air bubble supply line 113A, and may radially branch, as needed, so that air bubbles evenly hit the lower surfaces of hollow fiber membranes 4A. If more than one bundle of hollow fiber membranes 4A is arranged in one filter membrane housing 5, and air bubbles are supplied from scrubber wastewater supply line L2, then some bundles may not receive a sufficient amount of air bubbles. However, by providing such air distribution pipe 113B, contaminants that adhere to the side surfaces of hollow fiber membranes 4A can be effectively peeled off. It should be noted that means for distributing air bubbles is not limited to air distribution pipe 113B. For example, scrubber wastewater supply line L2 may branch into a plurality of lines downstream of filter membrane housing 5 (for an example, the section between the bottom of filter membrane housing 5 and valve 1 in Fig. 2), and the respective lines may be connected to nozzles that are provided on the bottom of filter membrane housing 5.

Since hollow fiber membranes 4A are used to purify scrubber wastewater in the present embodiment, as described above, the following advantages can be obtained as compared to a purification method using a conventional centrifugal separator. First, the concentration factor of scrubber wastewater is high, and the reduction of turbidity is also easy. A centrifugal separator separates water and contaminants by centrifugal force. Therefore, as particulate matter become finer, the action of the centrifugal force is weakened, and it is difficult to increase the concentration factor and to reduce the turbidity. On the other hand, it is easy for hollow fiber membranes 4Ato increase the concentration factor and to reduce the turbidity by appropriately selecting the pore diameter. In one example, a concentration factor of about 20 is obtained. It is also easy to increase the capacity for treating scrubber wastewater, and in one embodiment, a capacity of about 10m³/h is obtained (in Patent document 2, the flow rate that can be treated by the centrifugal separator is about 200L/h).

Next, it is difficult for a centrifugal separator to reduce the amount of waste matter. As mentioned above, it is difficult for a centrifugal separator to increase the concentration factor. Thus, it is necessary to collect a large amount of water in order to lower the turbidity within the criteria. However, since waste matter cannot be dumped into the sea during navigation, a large storage facility may be required. In case of hollow fiber membranes 4A, the waste matter is obtained as slurry-like sludge, and the amount of waste matter can be easily reduced. Further, in principle, it is difficult to separate oil by a centrifugal separator because the specific gravity of the oil is lighter than that of sea water, and an oil filter etc. may be additionally required. Hollow fiber membranes 4A can simultaneously separate both fine particulate matter and oil from water. Therefore, the configuration of the facility is simplified.

Next, a centrifugal separator has a large number of separation discs that are stacked. Therefore, oil etc. that is contained in exhaust gas may adhere in the narrow space between separation discs, and may cause an increase in differential pressure and a decrease in yield due to clogging of passages. On the other hand, in case of hollow fiber membranes 4A, oil etc. adheres to the outer surfaces thereof and does not easily enter permeating space 9. Therefore, clogging of the passages is less likely to occur. Moreover, as described above, the outer surfaces of hollow fiber membranes can always be kept clean by a plurality of means, such as scrubbing by air bubbles, backwashing and agent washing. A centrifugal separator requires disassembling of a large number of separation discs for cleaning, which may be laborious maintenance work and may be difficult to perform during navigation. However, cleaning methods, such as scrubbing, backwashing and agent washing can be performed even during navigation.

In addition, a centrifugal separator is typically made of a metal, and it is often undesirable to introduce sea water from the viewpoint of preventing corrosion. Since sea water is concentrated while circulating in scrubber 2, the salt concentration of scrubber wastewater is higher than the salt concentration of typical sea water (about 3%). In order to cope with such a high salt concentration, a highly corrosion-resistant material is required, but it has a large cost effect. Since hollow fiber membranes 4A are made of resin, which is highly corrosion-resistant, adopting measures against only the corrosion of pipes and valves is sufficient. In addition, in a centrifugal separator, when water is drained for dissembling, inspection and so on, precipitated and solidified salt may be deposited on the separation discs and may clog the passages. Hollow fiber membranes 4A do not require frequent drainage and are less likely to cause such problems.

In addition, a centrifugal separator is often operated at a constant rotational velocity to stabilize the separating performance. On the other hand, since the amount of scrubbing water that is sprayed in the scrubber, that is, the amount of scrubber wastewater, increases as the engine load increases, the turbidity of the outlet water of the centrifugal separator tends to increase when the engine load increases. For this reason, a raw water tank (a buffer tank) for temporarily storing a large amount of scrubber wastewater, that is generated when the engine load is high, may be needed in the ship in order to keep the turbidity equal to or lower than the criteria. Further, when centrifugal separators are arranged in series and when the turbidity of the outlet water of the first stage centrifugal separator is high, there is a possibility that the amount of water that is supplied to the second stage centrifugal separator has to be reduced. For this reason, a raw water tank (a buffer tank) for temporarily storing an amount of scrubber wastewater beyond treatment capacity may also be needed in this case. However, it is not preferable to provide a large tank in a ship having a limited installation area because it may affect other facilities. Due to high flexibility to the change in the flow rate of the scrubber wastewater, it is easy for hollow fiber membranes 4A to keep the turbidity equal to or lower than the criteria and to limit the capacity of raw water tank 3.

### (Second embodiment)

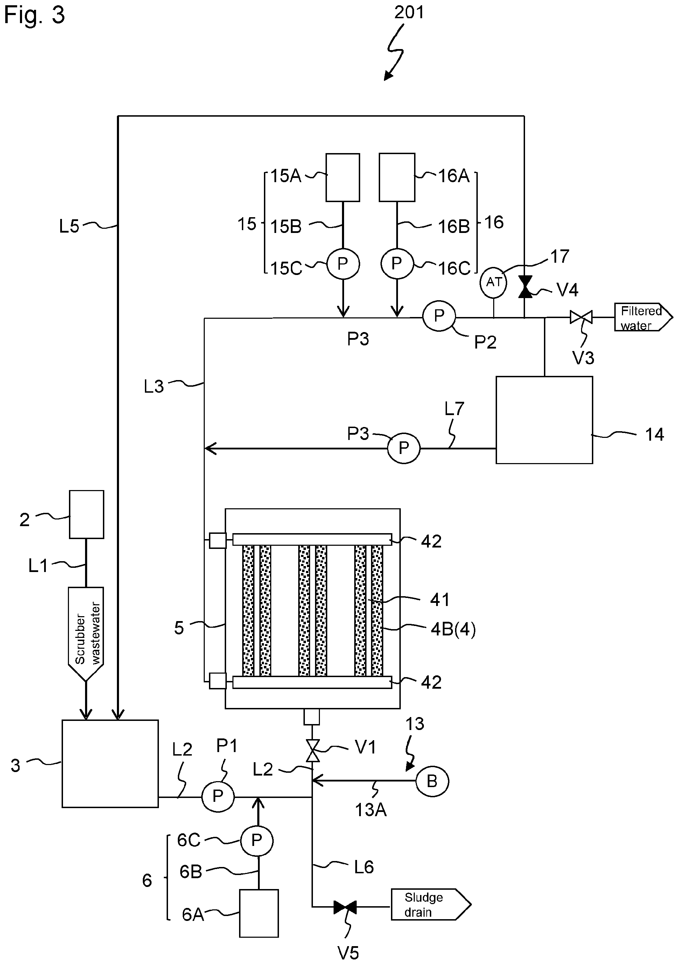

Fig. 3 is a schematic view showing the arrangement of purifying apparatus 201 according to the second embodiment of the present invention. The present embodiment is different from the first embodiment in that ceramic membrane 4B is used as filter membrane 4 and in that first return line L4 is not provided, but the other configuration and effect are the same as those of the first embodiment unless otherwise mentioned. Ceramic membrane 4B is a hydrophilic membrane.

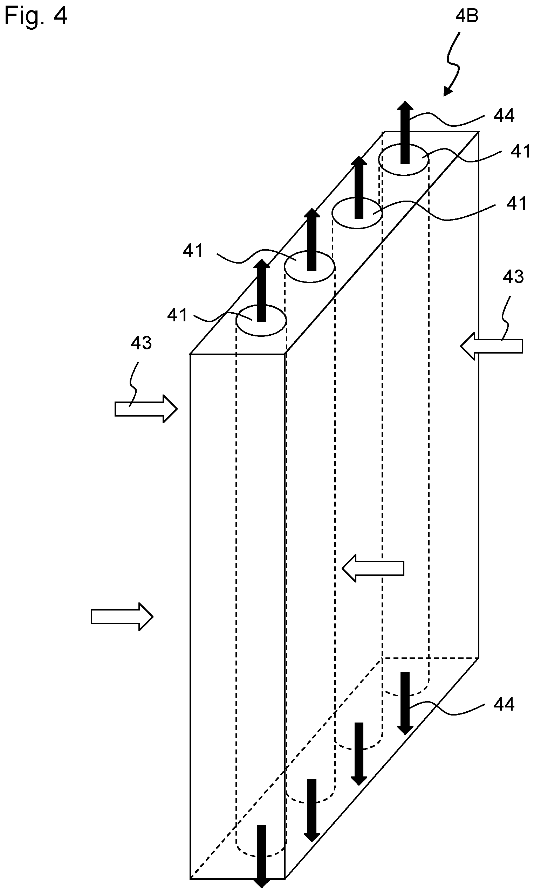

Fig. 4 shows a schematic configuration of ceramic membrane 4B. Ceramic membrane 4B is a flat film that is made of ceramic with a plurality of passages 41 formed inside. Scrubber wastewater flows through passages 41. Both ends of passage 41 are open on the side surfaces of ceramic membrane 4B, and water collecting pipes 42 (See Fig. 3) are connected to both ends. Water collecting pipes 42 are connected to filtered water exhaust line L3. Scrubber wastewater permeates from the outer surface of ceramic membrane 4B to the inside thereof through countless pores of the ceramic, as shown by arrows 43 and is exhausted to passages 41, as shown by arrows 44. Contaminants having large particle size stay on the outer surface of ceramic membrane 4B while contaminants having small particle size are captured by the pores of the ceramic, and filtered water from which most of the contaminants have been removed is collected by passages 41. One or more ceramic membrane 4B is housed in filter membrane housing 5 having the form of a casing. When more than one ceramic membrane 4B is housed, a gap that allows scrubber wastewater to flow through is provided between adjacent ceramic membranes 4B.

Since first return line L4 is not provided, the entire amount of scrubber wastewater that flows in scrubber wastewater supply line L2 is fed and supplied to ceramic membrane 4B. This is because ceramic membrane 4B allows a large amount of water to permeate, and the possibility of causing a large increase in pressure loss is low even if the entire amount of water is fed. Of course, it is also possible to provide first return line L4, as in the first embodiment. Conversely, when the amount of water to be treated by hollow fiber membranes 4A is small (for example, when a sufficient number of hollow fiber membranes 4Aare provided relative to the flow rate to be treated), it is possible to omit first return line L4. More than one ceramic membrane 4B may be stacked vertically in order to feed scrubber wastewater to ceramic membranes 4B by gravity. That is, scrubber wastewater supply pump P1 and the arrangement in which more than one ceramic membrane 4B is stacked vertically are examples of the means for feeding scrubber wastewater to ceramic membrane 4B. When scrubber wastewater supply pump P1 is provided, there is no limitation on the orientation of ceramic membrane 4B.

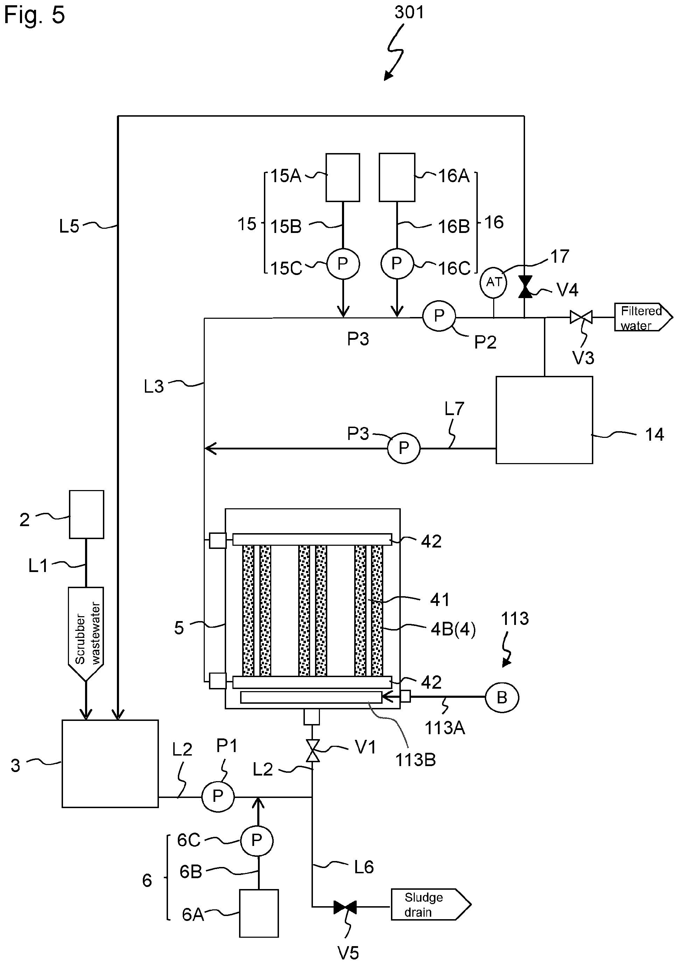

The present embodiment may be modified in the same manner as the first embodiment. Fig. 5 is a view similar to Fig. 3 showing purifying apparatus 301 of a modification of the present embodiment. Air bubble generating means 113 has air bubble supply line 113A and air distribution pipe 113B that is connected to air bubble supply line 113A and that is housed in filter membrane housing 5. Air distribution pipe 113B is provided below ceramic membrane 4B. Air distribution pipe 113B is a tube having a plurality of holes that communicate with air bubble supply line 113A, and may radially branch, as needed, such that air bubbles evenly hit the lower surface of ceramic membrane 4B. In the second embodiment, ceramic membrane 4B having a flat plate shape is used. Thus, it is preferable that filter membrane housing 5 have a rectangular parallelepiped shape. In filter membrane housing 5 having a rectangular parallelepiped shape. air bubbles are less likely to be uniformly distributed than in a filter membrane housing having a cylindrical shape, and portions where air bubbles do not reach are easily generated. This tendency may increase particularly when a plurality of flat plate shaped ceramic membranes 4B is arranged in parallel. According to the modification, contaminants can be efficiently peeled off from all of ceramic membranes 4B by optimizing the shape, route etc. of air distribution pipe 113B.

### (Third embodiment)

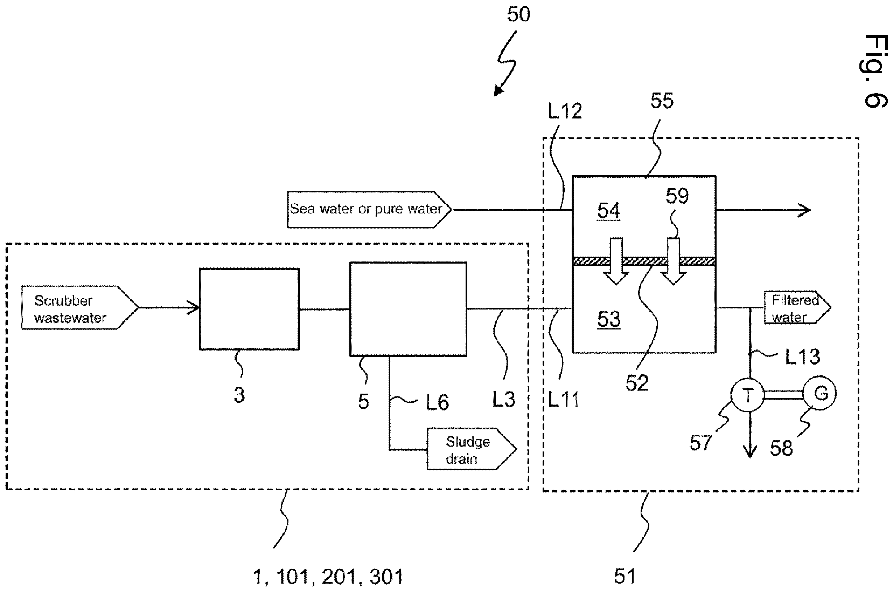

Fig. 6 shows a schematic view showing the arrangement of osmotic power generation system 50 according to the third embodiment of the present invention. Osmotic power generation system 50 has a purifying apparatus and osmotic power generation apparatus 51 that is located downstream of the purifying apparatus. The purifying apparatus may be, for example, purifying apparatus 1, 101, 201, 301 of the first or second embodiment. Hereinafter, purifying apparatus 1 will be used as an example. Osmotic power generation apparatus 51 has forward osmosis membrane 52, as well as first space 53 and second space 54 that are adjacent to each other via forward osmosis membrane 52. Forward osmosis membrane 52, first space 53 and second space 54 are arranged in common housing 55. Forward osmosis membrane 52 only allows solvent (water) to permeate from a solution having a low concentration of solutes to a solution having a high centration of solutes.

Permeating space 9 of purifying apparatus 1 is connected to filtered water line L11 via filtered water exhaust line L3. Filtered water of the scrubber wastewater that is produced by purifying apparatus 1 flows through filtered water line L11, and filtered water line L11 passes through first space 53. As described above, the salt concentration of the filtered water of the scrubber wastewater is higher than the salt concentration of typical sea water. Low salt concentration water having a lower salt concentration than the filtered water flows through low salt concentration water line L12, and low salt concentration water line L12 passes through second space 54. Low salt concentration water is not limited as long as the salt concentration is lower than that of the scrubber wastewater, but the low salt concentration water is preferably sea water (sea water, collected from the sea, having a salt concentration of about 3 to 4%), and it also may be pure water free of salt. Line L13 branches from filtered water line L11 downstream of first space 53, and turbine 57 is connected to line L13, and generator 58 is connected to turbine 57. The filtered water that is supplied to first space 53 is concentrated sea water. Thus, the filtered water has larger osmotic pressure than the low salt concentration water that is supplied to second space 54. Consequently, as shown by arrow 59, water that is contained in the low salt concentration water moves to first space 53 through forward osmosis membrane 52. As a result, the pressure in filtered water line L11 increases downstream of first space 53. This pressure increment drives turbine 57 to rotate, and electric power is generated by generator 58 that is coupled to turbine 57. In other words, the high osmotic pressure of the concentrated sea water is converted into electric energy. When sea water having a salt concentration of 3% is concentrated, while circulating in scrubber 2, for example, to a salt concentration of 6% that is commonly utilized in the osmotic power generation, the difference in osmotic pressure between the filtered water and the sea water having a salt concentration of 3% corresponds to about 3MPa, which is highly efficient as a driving source for turbine 57. The salt concentration of the concentrated sea water varies depending on the specifications and operating conditions of the scrubber, but higher salt concentration is better. The power that is obtained by generator 58 may be used as a part of electric power that is used in the ship. As a result, fuel consumption of the engine is reduced, the amount of exhaust gas is reduced, scrubber wastewater is reduced, and the amount of waste is reduced.

### (Example)

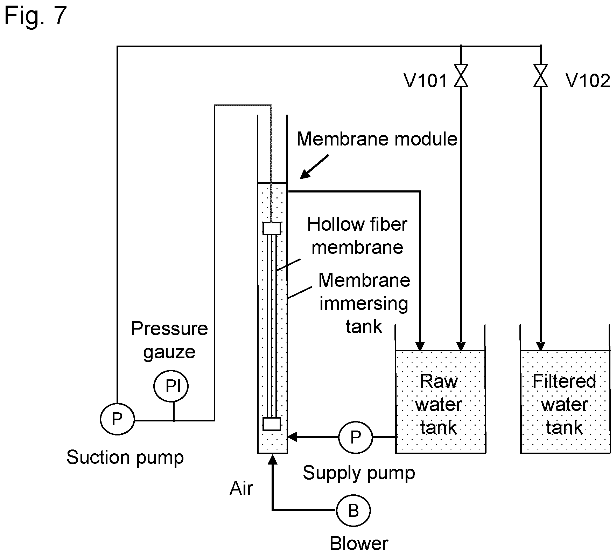

A test to feed water through a filter membrane (a hollow fiber membrane) was conducted using the apparatus shown in Fig. 7. As raw water, simulated exhaust water that is made by mixing sea water of a salt concentration 3% with SOx components, oil and suspended substances (SS). The test was conducted as follows.
(1) Feeding raw water to a raw water tank.
(2) Constantly stirring the water during the test in order to prevent the SS etc. from precipitating.
(3) Constantly distributing air by means of a blower in order to clean the surface of the membrane.
(4) Supplying the raw water in a membrane immersing tank by means of a supply pump and returning overflow water back to the raw water tank.
(5) Conducting a membrane filtering and concentration process by means of a suction pump. The nominal pore diameter of the membrane module was 0.1 µm and the area of the membrane was 0.087 m².
(6) Collecting filtered water after closing valve V101 and opening valve V102, while recording the flow rate of the water that is filtered by the membrane, as well as the water temperature in the raw water tank, at a constant time interval.

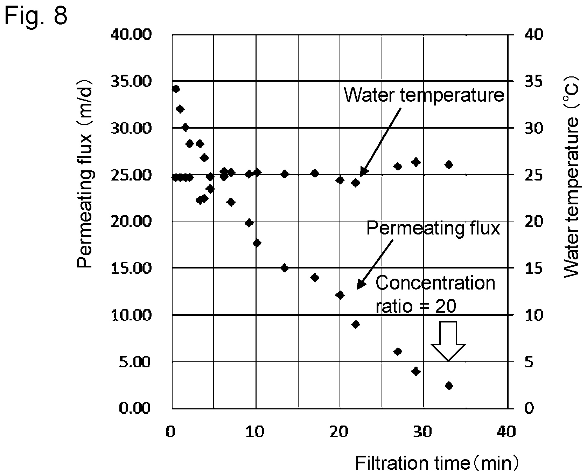

Fig. 8 shows a change in the permeating flux over time. The concentration factor of the raw water was 20. The permeating flux was 1.6m/d. This is larger than about 0. 6m/d or less, which is a permeating flux in an immersion-and-suction type filtration treatment that is generally used in the field of wastewater treatment, and is a sufficient permeating flux. The results of analyzing the water quality of the filtered water are shown in Table 1. The turbidity of the filtered water was 1 3NTU, which was well below the criterion, that is 25NTU. More than 99% of SS and oil was removed, and the filtered water had a good water quality. Due to the membrane's good performance of separating suspended matter, a transparent filtered water was obtained.

Next, after the filtration, a test of cleaning the membrane module was performed. The conditions for cleaning are shown in Table 2. After the membrane was cleaned in accordance with various conditions, the flow rate of pure water that was filtered by the membrane module was measured. The measurements are shown in Table 3. The measurements are ratios to the flow rate of pure water that was filtered by a new membrane module. The water permeability was substantially recovered in condition 4. It was found from this that the highest cleaning effect was obtained by combining surface-active agent and sodium hydroxide (NaOH).

**[Table 1]**

| Measurement(unit) | Raw water | Filtered water |
|---|---|---|
| turbidity (NTU) | - | 1.3 |
| SS (mg/L) | 5300 | <2 |
| Substance extracted from n-Hex(n-hexane) (mg/L) | 1200 | <5 |

**[Table 2]**

| | |
|---|---|
| Condition 1 | Backwashing by water |
| Condition 2 | NaOH+NaClO |
| Condition 3 | H₂SO₄ |
| Condition 4 | Surface-active agent + NaOH |

**[Table 3]**

| | |
|---|---|
| Before cleaning | About 50% |
| Condition 1 | About 50% |
| Condition 2 | About 50% |
| Condition 3 | About 50% |
| Condition 4 | 90% or more |

Although some preferred embodiments of the present invention have been illustrated and described in detail, it should be appreciated that various changes and modifications can be made thereto without deviating from the spirit and the scope of the appended claims.

### List of Reference Numerals

- 1, 101, 201, 301: purifying apparatus for scrubber wastewater
- 2: scrubber (treatment system for engine exhaust gas)
- 3: raw water tank
- 4: filter membrane
- 4A: hollow fiber membrane
- 4B: ceramic membrane
- 5: filter membrane housing
- 9: permeating space
- 12: circulating line
- 13, 113: air bubble supply means
- 14: filtered water tank
- 15: agent washing means
- 16: surface-active agent supply means
- 50: osmotic power generation system
- 51: osmotic power generation apparatus
- 52: forward osmosis membrane
- 53: first space
- 54: second space
- 55: housing
- 57: turbine
- 58: generator
- L1: scrubber wastewater exhaust line
- L2: scrubber wastewater supply line
- L3: filtered water exhaust line
- L4: first return line
- L5: second return line
- L6: sludge discharge line
- L7: backwash water supply line
- L11: filtered water line
- L12: low salt concentration water line
- P1: scrubber wastewater supply pump
- P2: suction pump
- P3: backwash water transfer pump

## Claims

1. A purifying apparatus for purifying scrubber wastewater that is exhausted from an exhaust gas treatment system for an engine of a ship, comprising a filter membrane that filters scrubber wastewater.

2. The purifying apparatus according to claim 1, wherein the filter membrane is hydrophilic.

3. The purifying apparatus according to claim 1 or 2, further comprising a circulating line of the scrubber wastewater, wherein the circulating line is connected to a scrubber wastewater source, and a portion of the circulating line constitutes an inlet space of the filter membrane.

4. The purifying apparatus according to any one of claims 1 to 3, further comprising:
a filter membrane housing that stores the scrubber wastewater and that houses the filter membrane such that the filter membrane is immersed in the scrubber wastewater;
a filtered water exhaust line that communicates with a permeating space of the filter membrane, wherein filtered water of the scrubber wastewater that is generated by the filter membrane is exhausted to the filtered water exhaust line;
a suction pump that is provided on the filtered water exhaust line; and
air bubble supply means that supplies air bubbles from below the filter membrane.

5. The purifying apparatus according to any one of claims 1 to 4, further comprising agent washing means for the filter membrane.

6. The purifying apparatus according to any one of claims 1 to 5, wherein the scrubber wastewater is sea water.

7. An osmotic power generation system comprising the purifying apparatus according to claim 6 and an osmotic power generation apparatus, wherein
the osmotic power generation apparatus includes;
a forward osmosis membrane,
first and second spaces that are adjacent to each other via the forward osmosis membrane,
a filtered water line that passes through the first space, wherein filtered water of the scrubber wastewater that is generated by the purifying apparatus flows through the filtered water line,
a low salt concentration water line that passes through the second space, wherein water having a lower salt concentration than the filtered water flows through the low salt concentration water line,
a turbine that is connected to the filtered water line downstream of the first space, and
a generator that is connected to the turbine.

8. A purifying method for purifying scrubber wastewater that is exhausted from an exhaust gas treatment system for an engine of a ship, comprising the step of filtering the scrubber wastewater by means of a filter membrane.

9. The purifying method according to claim 8, further comprising the step of causing the scrubber wastewater to circulate along a circulating line, wherein the circulating line is connected to a scrubber wastewater source, and a portion of the circulating line constitutes an inlet space of the filter membrane.

10. The purifying method according to claim 8 or 9, wherein the scrubber wastewater is sea water.
